# EUROPÄISCHE PATENTANMELDUNG

(11) **EP 1 388 700 A1**
(43) Veröffentlichungstag der Anmeldung: **11.02.2004**
(21) Anmeldenummer: 03016158.2
(22) Anmeldetag: 16.07.2003
(51) Int. Cl.: F16L 11/18, H02G 3/04, H02G 11/00, F16G 13/16, G02B 6/44

(54) **Gelenkiges Gliederrohr**

(30) Priorität: 06.08.2002 DE 10235999
(71) Anmelder: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll & Partner

(57) **Zusammenfassung**

Das gelenkige Gliederrohr ist aus einer Vielzahl gleichartiger Rohrsegmente (1, 1') zusammengesetzt, wobei jedes Rohrsegment ein Einsteckende (3) mit einer konvex sphärischen Außenfläche (7) und einem über diese vorspringenden Außenflansch (9) sowie ein dazu komplementäres Aufnahmeende (5) mit einer konkav sphärischen Innenfläche (11) und einem über diese nach innen vorspringenden Innenflansch (13) aufweist. Einsteckende (3) und Aufnahmeende (5) zweier Rohrsegmente (1, 1') sind jeweils derart ineinandergesteckt, daß der Außen- und Innenflansch (9, 13) einander hintergreifen und der Außenflansch (9) an der sphärischen Innenfläche (11) und der Innenflansch (13) an der sphärischen Außenfläche (7) anliegend geführt ist, so daß die Rohrsegmente nach Art von Kugelgelenken miteinander schwenkbar verbunden sind.

## Beschreibung

Die Erfindung betrifft ein gelenkiges Gliederrohr, das aus einer Vielzahl gleichartiger Rohrsegmente zusammengesetzt ist, die gelenkig miteinander verbunden sind. Das erfindungsgemäße Rohr ist vorzugsweise zur Verwendung als Schutzrohr für Kabel, Kabelbündel und dergleichen bestimmt. Die Erfindung betrifft auch ein Verfahren zur Herstellung des Gliederrohres durch Zusammensetzung der Rohrsegmente.

Aus EP 0 197 546 A2 ist ein flexibles Kabelschutzrohr bekannt, das aus einer Vielzahl gleichartiger Rohrsegmente zusammengesetzt ist, wobei jedes Rohrsegment ein Einsteckende mit einer konvex sphärischen Außenfläche und ein dazu komplementäres Aufnahmeende mit einer konkav sphärischen Innenfläche aufweist. Jeweils zwei benachbarte Rohrsegmente, deren Einsteckende und Aufnahmeende ineinandergreifen, sind durch die dann zueinander konzentrisch liegenden sphärischen Innen- und Außenflächen miteinander zugfest verbunden und in allen Richtungen schwenkbar aneinander geführt. Die sphärischen Flächen können unmittelbar gleitend aneinander anliegen. Bei anderen Ausführungsformen besteht zwischen den sphärischen Flächen ein Spalt, in dem zum Beispiel ein Dichtungsring angeordnet sein kann. Bei einer weiteren Ausführungsform Fig. 20) trägt die sphärische Außenfläche des Einsteckendes zwei nach außen vorspringende Rippen, die an der sphärischen Innenfläche des Aufnahmeendes anliegen. Ein wesentlicher Nachteil dieses bekannten flexiblen Gliederrohres besteht darin, daß die Zugfestigkeit begrenzt ist. Bei starkem Zug auf das Rohr kann durch die Keilwirkung zwischen dem Einsteckende und der sphärischen Innenfläche des Aufnahmeendes das Aufnahmeende aufgeweitet werden, so daß das Einsteckende herausrutschen kann. Ferner ist die axiale Länge der einzelnen Rohrsegmente relativ groß und der maximale Schwenkwinkel zwischen den Rohrsegmenten relativ klein, was beides zur Folge hat, daß der Krümmungsradius, mit dem das Rohr gekrümmt werden kann, relativ groß ist.

Ein flexibles Gliederrohr ähnlicher Bauart, das als flexible Kupplung zwischen zwei starren Rohrstücken verwendet werden soll, ist aus WO 00/65978 bekannt.

Aus EP 0 676 840 B1 ist ein flexibles Kabelschutzrohr bekannt, das aus einer Vielzahl gleichartiger Rohrsegmente besteht, die durch Rastorgane aneinander verrastbar sind, wobei jedes Rohrsegment als Rastorgane eine Anzahl von elastischen Haken aufweist, die in Ausnehmungen oder in einer Ringnut des benachbarten Rohrsegmentes eingreifen. Angrenzend an die Rastverbindung sind aneinander anliegende konische beziehungsweise bombierte Dichtflächen vorgesehen. Die Schwenkbarkeit der Rohrsegmente zueinander ist begrenzt (auf maximal ca. 4°), und auch die Zugfestigkeit ist durch die elastische Nachgiebigkeit der Haken begrenzt.

Der Erfindung liegt die Aufgabe zugrunde, ein gelenkiges Gliederrohr, insbesondere zur Verwendung als Kabelschutzrohr, zur Verfügung zu stellen, das bei relativ kurzer Baulänge der Rohrsegmente eine möglichst große Abwinklung der Rohrsegmente zueinander ermöglicht und durch formschlüssige Verhakung der Rohrsegmente aneinander eine maximale Zugfestigkeit gewährleistet.

Die erfindungsgemäße Lösung der Aufgabe ist im Anspruch 1 angegeben. Die abhängigen Ansprüche beziehen sich auf weitere vorteilhafte Merkmale des erfindungsgemäßen Gliederrohres.

Die Erfindung wird im folgenden anhand der Zeichnungen näher erläutert: Es zeigt:
- Fig. 1: ein Gliederrohr gemäß der Erfindung in Seitenansicht, teilweise im Schnitt;
- Fig. 2 bis 5: ein einzelnes Rohrsegment für das Gliederrohr gemäß Fig. 1 in Seitenansicht, zwei Stirnansichten sowie im Axialschnitt;
- Fig. 6 und 7: zwei miteinander verbundene Rohrsegmente in Seitenansicht, teilweise im Axialschnitt, in der koaxialen Stellung bzw. in maximal abgewinkelter Stellung;

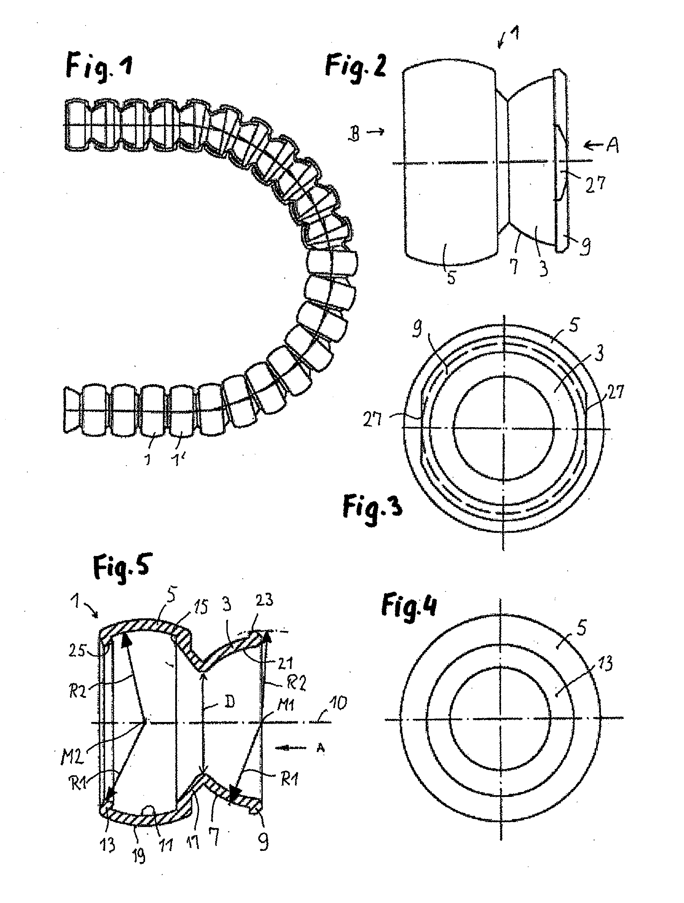

Das in Fig. 1 gezeigte flexible Gliederrohr, das im unteren Teil von Fig. 1 in Seitenansicht und im oberen Teil im Längsschnitt dargestellt ist, besteht aus einer Vielzahl von Rohrsegmenten 1, 1', die mit ineinandergreifenden Einsteck- und Aufnahmeenden nach Art von Kugelgelenken miteinander verbunden sind. Benachbarte Rohrsegmente 1, 1' sind deshalb in allen Richtungen begrenzt gegeneinander verschwenkbar, so daß das gesamte Gliederrohr eine gekrümmte Form annehmen kann. In Fig. 1 sind die Rohrsegmente am Anfang und Ende des Gliederrohrs in geradliniger, nicht abgewinkelter Konfiguration und die Rohrsegmente im mittleren Bereich des Rohres in der maximal gegeneinander abgewinkelten Konfiguration dargestellt.

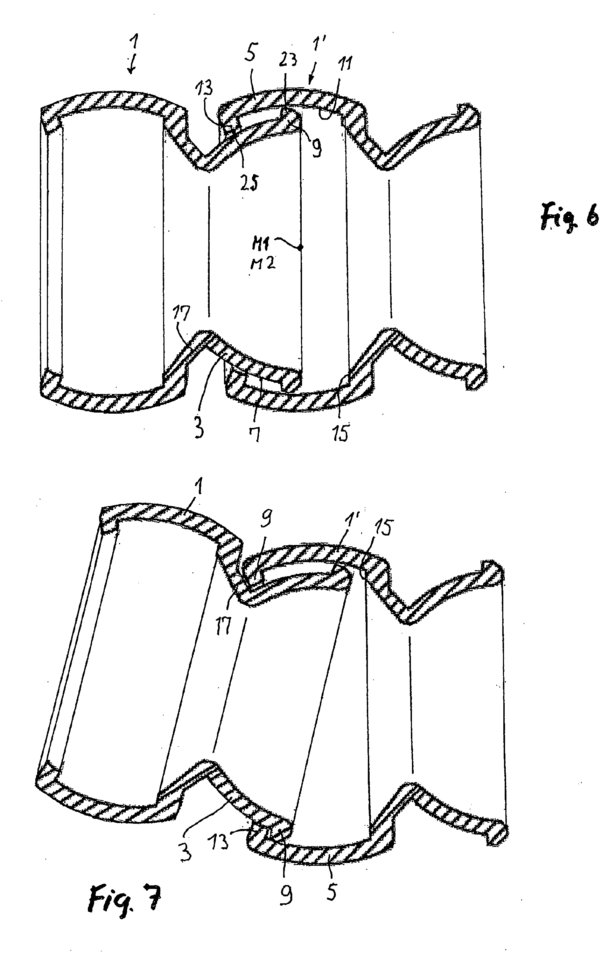

Fig. 2 zeigt ein einzelnes Rohrsegment 1 in Seitenansicht, Fig. 5 zeigt das Rohrsegment 1 im Längsschnitt. Fig. 3 zeigt eine Stirnansicht des Rohrsegmentes 1 in Richtung des Pfeiles A von Fig. 2, Fig. 4 zeigt eine Stirnansicht in Richtung des Pfeiles B von Fig. 2. Die Rohrsegmente 1 werden vorzugsweise durch Spritzgießen aus einem geeignetem Kunststoff hergestellt. Ein besonders bevorzugtes Material ist hygroskopisches Polyamid, insbesondere Polyamid 6 (PA6) die besonderen Eigenschaften eines solchen Materials erleichtern bzw. ermöglichen den Zusammenbau der Rohrsegmente 1 zu dem fertigen Gliederrohr.

Das Rohrsegment 1 hat auf der in Fig. 2 und Fig. 5 rechten Seite ein Einsteckende 3 und auf der anderen Seite ein Aufnahmeende 5. Das Aufnahmeende 3 hat eine konvex sphärisch gekrümmte Außenfläche 7, die ein Ringsegment einer gedachten Kugeloberfläche mit dem Radius R1 ist. Der Krümmungsmittelpunkt M1 der sphärischen Außenfläche 7 liegt in der das Rohrsegment 1 am Einsteckende 3 begrenzenden Stirnebene. Am Ende des Einsteckendes 3 befindet sich ein über die sphärische Außenfläche 7 nach außen vorspringender ringförmiger Flansch 9.

Auf der in Fig. 2 und Fig. 5 linken Seite des Rohrsegments 1 befindet sich das Aufnahmeende 5, das eine konvex sphärische Innenfläche 11 aufweist. Die sphärische Innenfläche 11 ist ein Ringsegment einer gedachten Kugeloberfläche mit dem Kugelradius R2 der gröβer als der Radius R1 ist. Der Krümmungsmittelpunkt M2 der sphärischen Innenfläche 11 liegt ungefähr in der Mitte der axialen Länge des Aufnahmeendes 5 bzw. der sphärischen Innenfläche 11. An dem in Fig. 2 und Fig. 5 linken Ende des Aufnahmeendes 5 ist ein ringförmiger Innenflansch 13 angeformt, der über die sphärische Innenfläche 11 nach innen vorspringt.

Auf der dem Innenflansch 13 gegenüberliegenden Seite wird die sphärische Innenfläche 11 des Aufnahmeendes 5 durch eine ringförmige Anschlagschulter 15 begrenzt. Das Einsteckende 3 ist mit dem Aufnahmeende 5 durch einen kegelförmigen Übergangsabschnitt 17 verbunden.

Aus Gründen der Material- und Gewichtsersparnis wird angestrebt, daß das Rohrsegment 1 eine überall im wesentlichen konstante Wanddicke hat. Aus diesem Grund sind die Außenfläche 19 des Aufnahmeendes 5 und die Innenfläche 21 des Einsteckendes 3 ebenfalls sphärische Flächen, die zu den sphärischen Flächen 11 bzw. 7 konzentrisch verlaufen. Dies ist jedoch für die Erfindung nicht zwingend notwendig.

Die äußere Umfangsfläche des Außenflansches 9 des Einsteckendes 3 ist mindestens annähernd eine konvex sphärische Fläche, die mindestens annähernd den gleichen Krümmungsradius R2 hat wie die sphärische Innenfläche 11 des Aufnahmeendes 5. Andererseits ist die innere Umfangsfläche 25 des Innenflansches 13 des Aufnahmeendes 5 ebenfalls mindestens annhähernd eine konkav sphärische Fläche mit dem gleichen Kugelradius R1 wie die sphärische Außenfläche 7 des Einsteckendes 3.

Man erkennt in Fig. 5, daß die sphärische Innenfläche 11 des Aufnahmeendes sich in etwa symmetrisch zu beiden Seiten von der zur Achse 10 des Rohrsegmentes senkrechten Ebene erstreckt, in der der Krümmungsmittelpunkt M2 liegt. Dagegen erstreckt sich die sphärische Außenfläche 7 des Einsteckteils 3 von der Ebene des Krümmungsmittelpunktes M1 aus nur nach einer Seite.

Fig. 6 und 7 zeigen die Verhältnisse, die sich ergeben, wenn zwei Rohrsegmente 1, 1' der in Fig. 2 bis 5 gezeigten Art durch Einstecken eines Einsteckendes 3 in ein Aufnahmeende 5 miteinander gekoppelt sind. Der Außenflansch 9 des Einsteckteils 3 liegt mit seiner Umfangsfläche 23 im wesentlichen spielfrei an der sphärischen Innenfläche 11 des Aufnahmeendes 5 an. Andererseits liegt die innere Umfangsfläche des Innenflansches 13 des Aufnahmeendes 5 ebenfalls im wesentlichen spielfrei an der sphärischen Außenfläche 7 des Einsteckendes 3 an. Es ergibt sich dadurch eine doppelte Kugelgelenkführung durch die Flansche 23 bzw. 13 an den sphärischen Fläche 11 bzw. 7 an zwei in Achsrichtung der Rohrsegmente gegeneinander versetzten Abstützebenen. Die sphärischen Flächen 7, 11 liegen konzentrisch zueinander, daß heißt ihre Krümmungsmittelpunkte M1 und M2 fallen zusammen.

Aus der in Fig. 6 dargestellten Position kann das Rohrsegment 1 gegen das Rohrsegment 1' verdreht, d.h. abgewinkelt werden, wobei der maximal erreichbare Verdrehwinkel bestimmt ist durch die axiale Länge der sphärischen Flächen 7 bzw. 11 im Verhältnis zum Durchmesser des Rohrsegments. Der maximale Auslenkwinkel ist gemäß Fig. 7 erreicht, wenn die rückseitigen Stirnflächen des Außenflansches 9 des Einsteckendes 3 und des Innenflansches 13 des Aufnahmeendes 5 gegeneinander zum Anschlag kommen, wie im unteren Teil von Fig. 7 gezeigt, und/oder wenn die vordere Stirnfläche des Einsteckendes 3 gegen die Innenschulter 15 des Aufnahmeendes 5 anschlägt, wie dies im oberen Teil von Fig. 7 nahezu der Fall ist.

Der Konuswinkel des konischen Übergangsabschnittes 17 dieses Rohrsegmentes ist vorzugsweise so gewählt, daß das Erreichen des maximalen Auslenkwinkels durch den Übergangsabschnitt 17 nicht behindert wird. Mit anderen Worten, und wie aus der Zeichnung ersichtlich, bilden die sphärische Außenfläche 7 des Einsteckteils 3 und die Außenfläche des Übergangsabschnitts 17 an der Außenseite des Rohrsegments 1 eine etwa V-förmige Nut, in die sich beim Abwinkeln der Rohrsegmente das vordere Ende des Aufnahmeendes 5 des einen Rohrsegmentes hineinbewegen kann.

Durch die einander hintergreifenden Flansche 9, 13 ist eine besonders hohe Zugfestigkeit des erfindungsgemäßen Gliederrohres gewährleistet. Selbst wenn auf das Rohr eine so starke Zugkraft ausgeübt wird, daß sich in Fig. 6 das Einsteckende 3 relativ zum Aufnahmeende 5 nach links verschiebt (unter aufweitender Verformung des Aufnahmeendes 5) so würde diese Auseinanderbewegung beendet werden, wenn die Flansche 9, 13 aneinander zur formschlüssigen Anlage kommen.

Die ineinandergesteckten, das Gliederohr bildenden Rohrsegmente 1, 1' bilden einen durchgehenden inneren Kanal für die Aufnahme eines Kabels, Kabelbündels oder dergleichen. Die engste lichte Öffnung jedes Rohrsegmentes 1 befindet sich dort, wo das Einstekkende 3 in den konischen Übergangsbereich 17 übergeht, und hat den in Fig. 5 mit D bezeichneten Durchmesser. Der für die Aufnahme eines Kabels oder dergleichen verfügbare Raum wird durch diesen Durchmesser D begrenzt, und zwar unabhängig davon, ob die Rohrsegmente 1, 1' gegeneinander abgewinkelt sind oder nicht. Durch Abbiegen des Gliederrohres gemäß Fig. 1 wird somit der für das Kabel oder dergleichen verfügbare Innenraum nicht verändert und kein Druck auf ein in dem Gliederrohr aufgenommenes Kabel ausgeübt.

Um das Einstecken eines Einsteckendes 3 in ein Aufnahmeende 5 zu erleichtern, können an dem kontinuierlich umlaufenden Außenflansch 9 des Einsteckendes 3 zwei einander gegenüberliegende Abflachungen 27 vorgesehen sein, wie in Fig. 2 und Fig. 3 schematisch dargestellt.

Für das Ineinanderstecken zweier benachbarter Rohrsegmente 1, 1' ist es nötig, daß sich der Außenflansch 9 des Einsteckendes 3 durch die vom Innenflansch 13 begrenzte lichte Öffnung des Aufnahmeendes 5 hindurch bewegt. Dies ist nur durch Deformierung des Einsteckendes 3 und/oder des Aufnahmeendes 5 möglich, was durch Verwendung bestimmter Materialien und entsprechende Behandlung dieser Materialien erreicht werden kann.

Wie bereits erwähnt, sind die Rohrsegmente 1, 1' vorzugsweise aus hygroskopischem Polyamid, insbesondere Polyamid 6 (PA6) durch Spritzgießen hergestellt. PA6 ist hygroskopisch, daß heißt es nimmt Feuchtigkeit auf, und zwar bei normaler Lagerung nach einigen Tagen ca. 2 bis 4 %. Die Feuchtigkeit bewirkt eine zunehmende elastische Verformbarkeit der Bauteile. Erfindungsgemäß wird diese durch Wasseraufnahme bewirkte erhöhte Verformbarkeit gezielt für den Zusammenbau der Rohrsegmente zum Gliederrohr ausgenutzt. Zu diesem Zweck wird jedes Rohrsegment 1, 1' als Ganzes oder mindestens im Bereich seines Einsteckendes 3 und/oder Aufnahmeendes 5 in Wasser eingetaucht, und zwar bei einer erhöhten Wassertemperatur von mehr als 50°C, vorzugsweise mindestens 80°C. Hierdurch kann in wenigen Minuten eine Wasseraufnahme bis zur Sättigung (ca. 11%) des Polyamids erreicht werden. In diesem wassergesättigten Zustand ist das Material so extrem verformbar, daß der Außenflansch 9 des Einsteckendes 3 durch die vom Innenflansch 13 begrenzte lichte Öffnung des Aufnahmendes 5 hindurch bewegt werden kann, ohne daß bleibende Beschädigungen durch zum Beispiel Überdehnung der Teile hervorgerufen werden. Die Verformbarkeit kann beispielsweise ausreichen, um einen Außenflansch 9 mit einem Außendurchmesser von z. B. 90 mm durch die von Innenflansch 13 begrenzte lichte Öffnung mit einem Durchmesser von z. B. 75 mm hindurch zu zwängen. Nach dem Zusammenbau des Gliederrohres geben die Bauteile die erhöhte Feuchtigkeit nach einigen Tagen normaler Lagerung wieder ab, sie können aber auch zum Beispiel in einem Trokkenofen innerhalb vier Stunden wieder in den spritzfrischen Zustand gebracht werden.

## Patentansprüche

1. Gelenkiges Gliederrohr,
das aus einer Vielzahl gleichartiger Rohrsegmente (1) zusammengesetzt ist,
wobei jedes Rohrsegment (1) ein Einsteckende (3) mit einer konvex sphärischen Außenfläche (7) und ein dazu komplementäres Aufnahmeende (5) mit einer konkav sphärischen Innenfläche ( 11 ) aufweist
und jeweils zwei benachbarte Rohrsegmente (1, 1') , deren Einsteckende (3) und Aufnahmeende (5) ineinandergreifen, durch die dann zueinander konzentrischen sphärischen Innen- und Außenflächen (7, 11) miteinander schwenkbar verbunden sind,
**dadurch gekennzeichnet, daß** das Einsteckende (3) einen über die sphärische Außenfläche (7) vorspringenden Außenflansch (9) und das Aufnahmeende (5) einen über die sphärische Innenfläche (11) nach innen vorspringenden Innenflansch (13) aufweist, derart
daß bei jeweils zwei benachbarten Rohrsegmenten (1, 1') der Außen- und Innenflansch (9, 13) einander hintergreifen und der Außenflansch (9) an der sphärischen Innenfläche (11) und der Innenflansch (13) an der sphärischen Außenfläche (7) anliegend geführt ist.

2. Gelenkiges Gliederrohr nach Anspruch 1,
**dadurch gekennzeichnet, daß** die äußere Umfangsfläche (23) des Außenflansches (9) des Einsteckteils (3) mindestens annähernd eine sphärische Fläche ist, deren Krümmungsradius (R2) gleich dem Krümmungsradius (R2) der sphärischen Innenfläche (11) des Aufnahmeendes (5) ist.

3. Gliederrohr nach Anspruch 1 oder 2,
**dadurch gekennzeichnet, daß** die innere Umfangsfläche (23) des Innenflansches (13) des Aufnahmeendes (5) mindestens annähernd eine sphärische Fläche ist, deren Krümmungsradius (A1) gleich dem Krümmungsradius (A1) der sphärischen Außenfläche (7) des Einsteckendes (3) ist.

4. Gliederrohr nach Anspruch 1,
**dadurch gekennzeichnet, daß** der Außenflansch (9) des Einsteckendes (3) zwei einander gegenüberliegende Abflachungen (27) aufweist.

5. Verfahren zur Herstellung eines Gliederrohres nach einem der Ansprüche 1 bis 4,
**dadurch gekennzeichnet, daß** die Rohrsegmente (1, 1') durch Spritzgießen aus einem hygroskopischen Polyamid, insbesondere Polyamid 6, hergestellt werden,
daß die Rohrsegmente (1, 1') oder Teile derselben durch Wasseraufnahme in einen Zustand erhöhter elastischer Verformbarkeit gebracht werden,
daß das Einsteckende (3) eines Rohrsegmentes (1) in das Aufnahmeende (5) eines anderen Rohrsegmentes (1, 1') unter elastischer Verformung mindestens des Aufnahmeendes (5) eingesteckt wird,
und daß das Gliederrohr anschließend getrocknet oder trocknen gelassen wird.
